# EUROPEAN PATENT APPLICATION

(11) **EP 1 473 469 A1**
(43) Date of publication of application: **03.11.2004**
(21) Application number: 03380103.6
(22) Date of filing: 29.04.2003
(51) Int. Cl.: F16B 19/10

(54) **Rivet for the fastening of pieces to the bodywork of a vehicle**

(71) Applicant: ITW ESPANA, SA, 08520 Les Franqueses del Valles(Barcelona) (ES)
(72) Inventor: Pares Isanta, Albert, 08520 Les Franqueses del Valles (BCN) (ES)
(74) Representative: Carpintero Lopez, Francisco

(57) **Abstract**

The rivet comprises a body (1) with laterally expandable pins (4) and a stem (2) which slides inside the body (1) producing the expansion of the pins (4), to procure an anchoring of the assembly in a housing. The head (6) of the stem (2) and the head (3) of the body (1) have inclined planes (8) and ramps (9), respectively, which in the position of maximum penetration of the stem (2) are coincident and determine an external continuity of the head of the rivet, whilst a rotation of 90° of the stem (2) signifies a sliding of the inclined surfaces and a separation of the head (6) of the stem (2) with respect to the head (3) of the body (1), allowing the drawing of the stem (2) through its head (6) and the dismantling of the body (1) by pulling, as a consequence of the stem (2) having a protuberance (10) which prevents that the same can become independent of the body (1) whereby the pulling of the former results in the extraction and dismantling of the whole assembly of the rivet with respect to the housing in which it is located.

## Description

### OBJECT OF THE INVENTION

The present invention relates to a rivet for the fastening of pieces to the bodywork of a vehicle, being constituted in plastic and comprising a stem and a body with pins which are expanded generally by the thrust of the actual stem in its axial displacement on the body, whereby in that expansion of the pins it is they which act as the means of retention of the rivet in a hole in the bodywork, achieving the fastening of the piece through which the actual rivet passes.

The object of the invention is to provide a rivet of the type referred to, in which the stem and the body form a single-component assembly, that is, that they cannot become independent, allowing thereby its being obtained in a single injection process, and making possible the dismantling of both elements and therefore of the rivet being carried out together by simple axial pulling of the stem.

### BACKGROUND OF THE INVENTION

In the automobile industry, the fastening of certain pieces and fittings to the bodywork of a vehicle is implemented by means of different types of pieces, among which stand out through being the most usual, those constituted by a kind of rivet, generally of plastic, formed by two elements, one as the rivet body with a head having a hole and some flexible pins which extend from the rear part of said head, the pins being separate from each other, defining between them a passage as continuation of the hole of the head referred to.

The other element of the rivet is formed by a stem which is made to pass axially through the hole in the head of the body, reaching the pins of said body in order to produce the lateral expansion of said pins.

By means of this type of rivet it is possible to fasten easily and efficiently pieces and/or fittings of a vehicle on the bodywork thereof, it being foreseen for this that the rivet passes through a hole of the piece to be fastened, being engaged in a hole foreseen opposite in the bodywork, which engagement is achieved precisely by the lateral expansion of the pins of the body of the rivet, when the stem is inserted axially.

The dismantling of this type of rivet presents serious problems and drawbacks, as a consequence, on one hand, of the plastic nature of the two elements which constitute the rivet and, on the other, as a consequence of both elements of the rivet being independent.

Thus, when the stem is in screw form and in the body there is a number of screw threads, the unscrewing on metallic pieces is carried out by pressing with an appropriate tool, so that by the friction between thread and screw, the dismantling of the piece or element is achieved.

When it is a matter of pieces or elements of plastic, the unscrewing by means of the tool has to be performed gently in order not to damage the screw threads of the body, whereby the unscrewing effect is not always achieved, since by having to press with the tool a force is applied contrary to the extraction direction, which causes the bending of the anchor pins and consequently disengagement between the screw threads.

Another form of carrying out the dismantling is by axially pulling the stem out of its housing, for which an appropriate extraction tool is required, unless the design of the stem head allows pulling with the fingernails or fingers, in which case said head should project and have a design which is non-uniform and displeasing.

Moreover, when the stem is pulled the extraction of this is achieved, leaving the body of the rivet in place, which means another second extraction is required, in this case of the body, with respect to the housing or hole in which it is located.

### DESCRIPTION OF THE INVENTION

The rivet which is disclosed has been designed to resolve the problem described above, based on a solution which is both simple and effective.

More specifically, the rivet of the invention has as its most fundamental characteristic the fact that body and stem form a single-component assembly, that is, they are not individual although the stem is capable of axial displacement with respect to the body, for the purpose that when dismantling by pulling the stem, the body is extracted at the same time.

Also, as both elements of the rivet form a single assembly, the latter can be obtained in a single injection process, that is, by means of a single mould, diminishing thereby the production cost.

Another characteristic of novelty of the rivet of the invention, consists in that the interior surface of the stem head has two opposing areas whereon are formed two inclined planes which are positioned on individual ramps foreseen for this purpose on the upper surface of the head of the body of the rivet, determining an adaptation between parts when the stem is displaced fully toward the interior, achieving thereby a completely uniform external surface as if it were a single piece or body.

Said complementary configuration of the inclined planes of the stem and ramps of the body, signifies that when the stem is rotated through 90°, by acting with a coin or tool on a central groove in the head thereof, slipping takes place of those inclined surfaces and the corresponding axial displacement of the stem toward the exterior, the latter emerging partially in order to be seized with the fingers and extract said stem by pulling and, in addition, the body together with the former, since such stem has some protuberances on its internal end which in the inward displacement of the stem slide in grooves established for this purpose on the internal face of the expandable pins of the body, whilst in the axial outward displacement or dismantling, those protuberances slide and guide between the grooves which determine the separation of the two expandable pins, abutting on the bottom of those grooves which delimit the two pins mentioned, in this manner the body is drawn outward, impeding thereby the stem becoming independent with respect to the body of the rivet.

### DESCRIPTION OF THE DRAWINGS

To complete the description which is being made and with the object of assisting in a better understanding of the characteristics of the invention, in accordance with a preferred example of practical embodiment thereof, said description is accompanied with a set of drawings, as an integral part thereof, wherein the following is represented by way of illustration but not restrictively:
Figure 1 shows a representation according to a perspective of the rivet object of the invention, wherein the stem is inserted into the body to its limiting position, allowing the external continuous surface of the head corresponding to said rivet to be seen.
Figure 2 shows a view in perspective like that of the previous figure but with the stem rotated through 90°, observing how by means of that rotation its head is separated from the head of the body to allow the former to be gripped and its corresponding pulling for dismantling.

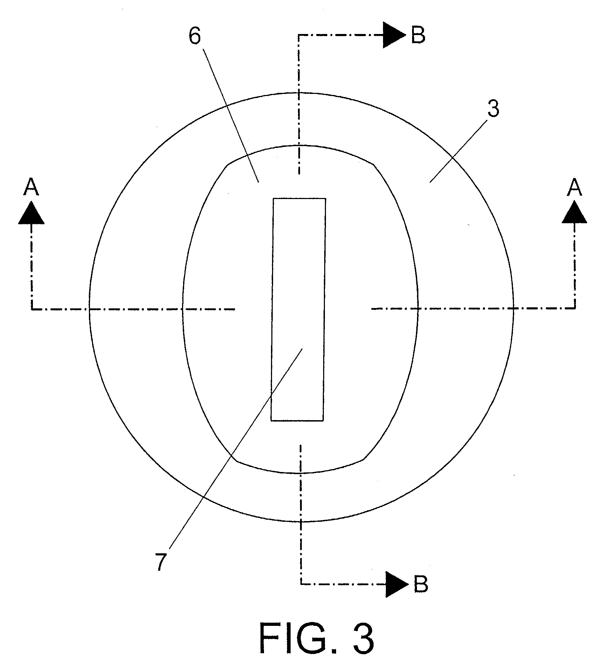

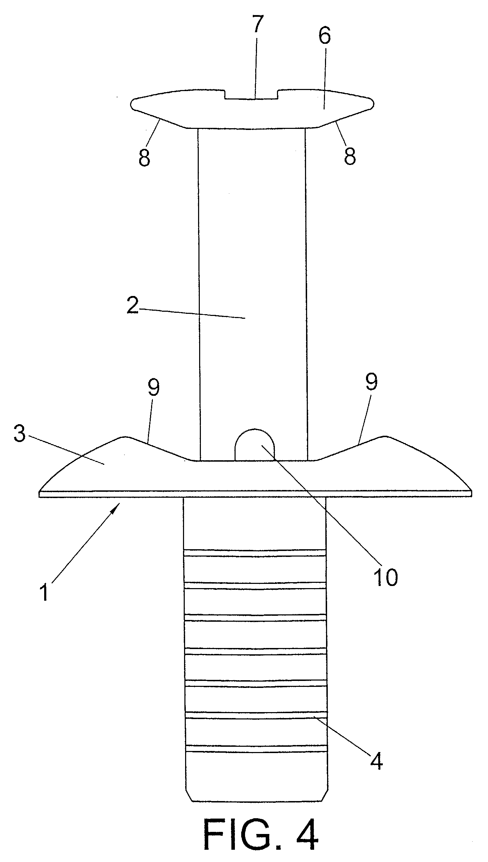

Figure 3 shows a plan view of the rivet represented in figure 4.
Figure 4 shows a view in side elevation of the rivet with the stem in position after moulding and before its insertion.

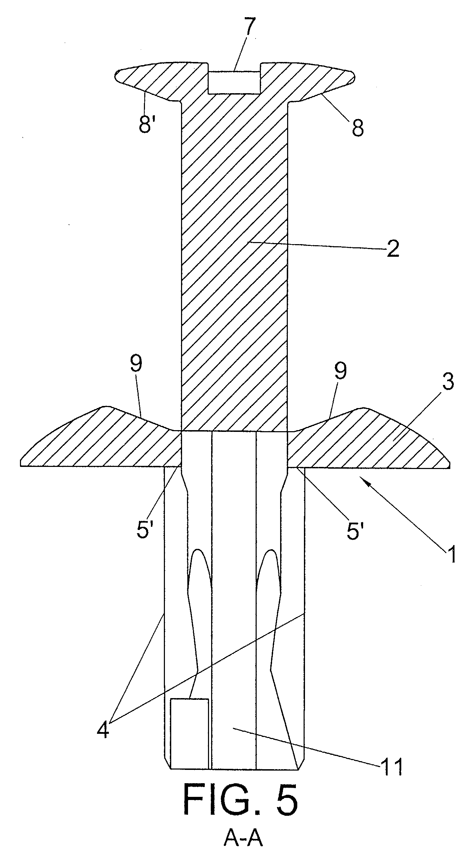

Figure 5 shows a view in cross-section corresponding to the cutting plane A-A of figure 3.

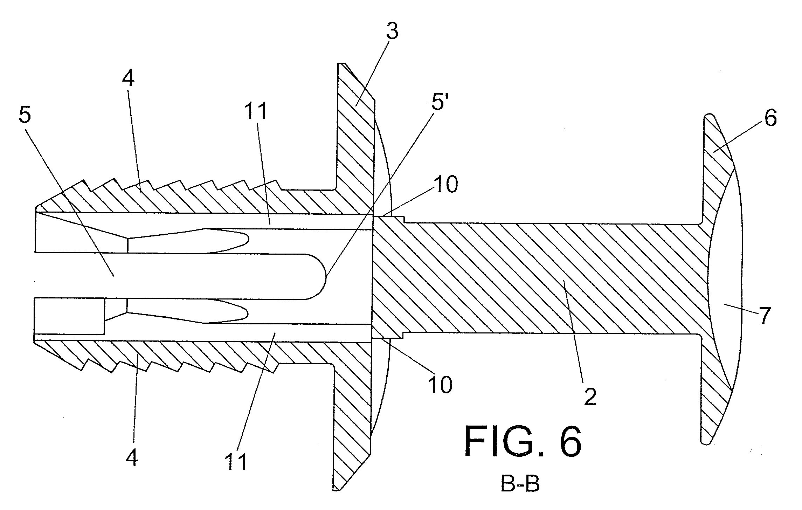

Figure 6 shows a view in cross-section corresponding to the cutting plane B-B of the same figure 3.

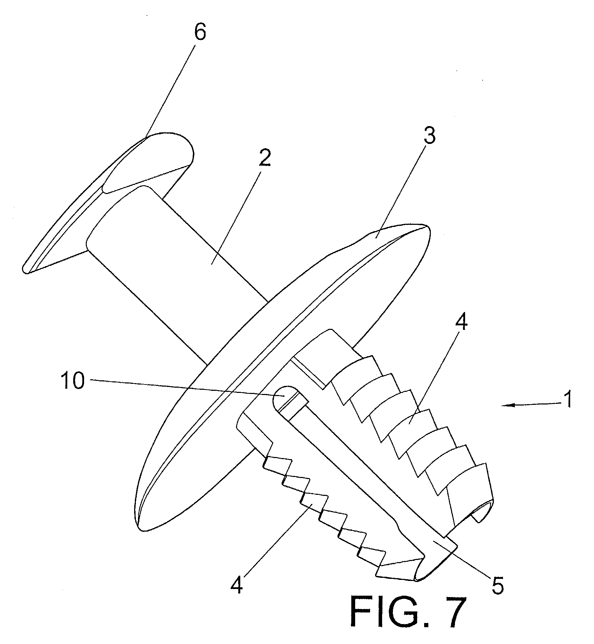

Figure 7 shows a figure of the rivet once dismantled, in which the two ends of the stem can be seen abutting on the end of the grooves of the body.

### PREFERRED EMBODIMENT OF THE INVENTION

In the light of the above-mentioned figures, it can be observed how the rivet of the invention comprises two plastic elements, one termed the body (1) of the rivet and another termed the stem (2) of the same rivet, both being connected to determine a single-component assembly, although the stem (2) is capable of moving axially with respect to the body (1).

Regarding the constitution of the body (1), as is conventional, the same comprises a head (3) from the rear face of which project two laterally expandable pins (4), with a longitudinal separation forming individual diametrically opposite grooves (5), all of which being conventional.

For its part, the stem (2) has a head (6) from which the actual stem extends, the head (6) having a central groove (7) for manipulation.

Thus, based on these characteristics and as previously stated, the rivet assembly is characterised in that the body (1) and the stem (2) form a single assembly with capability of axial displacement of the actual stem (2) with respect to the body (1), specifically through a hole implemented in the head (3) thereof and from which the pins (4) are determined axially and as continuation of the former.

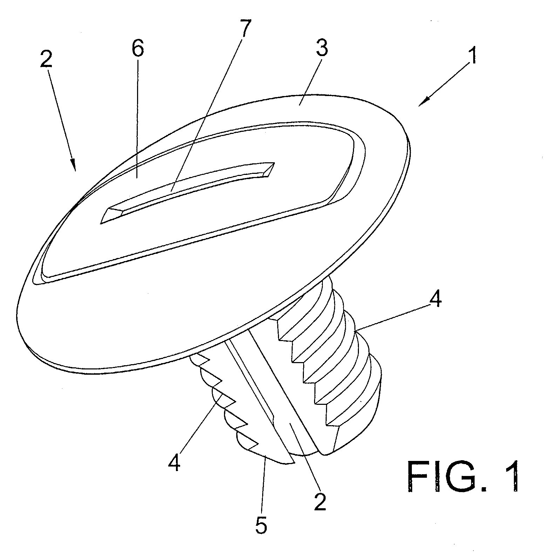

The interior part of the head (6) corresponding to the stem (2) has a pair of inclined planes (8) in opposing areas, which complement individual ramps (9) established for this purpose on the upper part of the head (3) corresponding to the body (1) of the rivet, so that in the position of maximum penetration of the stem (2) in the body (1) the inclined planes (8) rest on the ramps (9) determining a positional stability and also an external surface continuity in the assembly of the head, as shown in figure 1, that is, as if it were a single piece.

In the inward sliding of the stem (2) on the body (1), a pair of protuberances (10) foreseen on the end of the stem (2), and diametrically opposite, slide in respective grooves for guidance (11) formed for this purpose on the internal part of the pins (4), whilst in the displacement of the stem (2) in the opposite direction, that is, toward the exterior, after rotating it through 90°, the protuberances (10) are positioned in the grooves (5) defined between the pins (4), sliding along those grooves (5) until abutting against the upper edge (5') of the same.

In accordance with the above-mentioned characteristics, the application of the above-mentioned rivet is performed by insertion of the pins (4) of the body (1) of the rivet in the hole of the piece to be fastened and in another hole facing and foreseen in the bodywork of the vehicle, to which the piece in question has to be fastened, so that thereafter the displacement of the stem (2) is carried out toward the interior producing the lateral expansion of the pins (4) and thereby the engagement of the assembly of the rivet in its assembled position, the heads (3) and (6) of the body (1) and rivet (2) being made level and forming a continuous surface, uniform and pleasing, as is represented in figure 1.

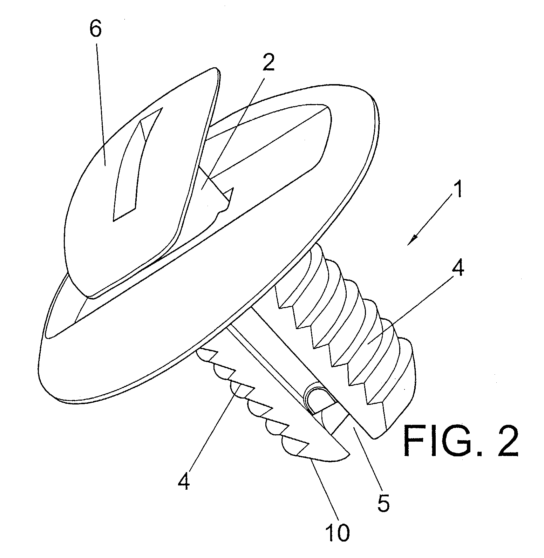

Starting from this operative position, if it is desired to carry out the dismantling of the rivet, the stem (2) will initially be rotated through 90° by means of a fingernail or any tool which can be applied in the groove (7) of the head (6) of such stem (2), so the rotation implies sliding between the inclined planes (8) and the ramps (9) producing the separation of the head (6) with respect to the head (3) of the body, as is represented in figure 2, at which point said head (6) can be caught and the stem (2) pulled, which will slide in the manner previously mentioned until the protuberances (10) abut against the bottom (5') of the grooves (5), at which point and if pulling of the stem (2) is continued, the extraction will take place of the latter together with the body (1), that is, of the whole rivet.

## Claims

1. Rivet for the fastening of pieces to the bodywork of a vehicle, which comprising two elements, one of them formed by a body with pins laterally expandable by means of the thrust of the second element, the latter formed by a stem passing axially through said body, is **characterised in that** the two elements of body (1) and stem (2) form a single-component assembly, in which the stem (2) is capable of moving axially with respect to the body (1) but without becoming independent; there being foreseen complementary means (8) and (9) established in the stem (2) and in the body (1) for the separation of the head (6) of the former with respect to the head (3) of the body (1), by means of rotating the first through 90°, also having means (10) which impede both elements from becoming independent.

2. Rivet for the fastening of pieces to the bodywork of a vehicle, according to claim 1, **characterised in that** the means which carry out the separation of the head (6) of the stem (2) with respect to the head (3) of the body (1), are constituted by some inclined planes (8) established in the lower part of the head (6) of the stem (2) and some ramps (9) established in the upper part of the head (3) of the body (1), said inclined planes (8) and ramps (9) being coincident in the operative position and of maximum penetration of the stem (2) on the body (1), determining uniformity between both on the external surface.

3. Rivet for the fastening of pieces to the bodywork of a vehicle, according to claim 1, **characterised in that** the means which impede the stem (2) becoming independent with respect to the body (1), are constituted by some protuberances (10) foreseen in opposition and in correspondence with the internal end of the actual stem (2), which protuberance slide in grooves (5) defined between the expandable pins (4) of the body (1), the protuberances of which constitute the maximum extraction limit of the stem (2) in the position of displacement of the latter toward the exterior.

4. Rivet for the fastening of pieces to the bodywork of a vehicle, according to claim 3, **characterised in that** protuberances (10) of the stem (2) slide and are guided, in the displacement toward the interior of the body (1), along axial grooves (11) established in the internal face of the expandable pins (4) of the actual body (1).

## Amended claims

### Amended claims in accordance with Rule 86(2) EPC.

**1.** Rivet for the fastening of pieces to the bodywork of a vehicle, comprising two elements, one of them formed by a body with pins laterally expandable by means of the thrust of the second element, the latter formed by a stem passing axially through said body and complementary means established in the stem and in the body for the separation of the head of the former with respect to the head of the body, by means of rotating the first through 90° and also having means which impede both elements from becoming independent, **characterised in that** the body (1) and the stem (2) form a single-component assembly obtained in a single injection process by means of a single mould, said stem (2) being axially movable with respect to the body (1) and provided with two protuberances (10) in its internal end that prevent the stem (2) to leave from the body (1), being extracted the body (1) and the stem (2) jointly, being also these protuberances (10) those that guide the displacement of the stem (2) towards the interior of the body (1) when mounting the rivet, expanding the pins (4) laterally and engaging the rivet to the bodywork of the vehicle.

**2.** Rivet for the fastening of pieces to the bodywork of a vehicle, according to claim 1, **characterised in that** the means which carry out the separation of the head (6) of the stem (2) with respect to the head (3) of the body (1) are constituted by some inclined planes (8) established in the lower part of the head (6) of the stem (2) and some ramps (9) established in the upper part of the head (3) of the body (1), said inclined planes (8) and ramps (9) being coincident in the operative position and of maximum penetration of the stem (2) on the body (1), determining uniformity between both of the external surface.

**3.** Rivet for the fastening of pieces to the bodywork of a vehicle, according to previous claims, **characterised in that** between the two pins (4) are defined two longitudinal separations forming individual diametrically opposite gooves (5) allowing the pins (4) to laterally expand in the inward sliding of the stem (2) on the body (1) when engaging the rivet to the bodywork and guiding the protuberances (10) while the stem (2) slides outwardly when dismantling the rivet, impeding its rotation, until abutting against the upper edge (5') of the grooves (5), extracting the stem (2) together with the body (1).

**4.** Rivet for the fastening of pieces to the bodywork of a vehicle, according to previous claims, **characterised in that** in the internal face of the pins (4) are established axial grooves (11) that guide the protuberances (10) in the displacement of the stem (2) toward the interior of the body (2).
